**Europäisches Patentamt**

**European Patent Office**

**Office européen des brevets**

(19)

(11) Veröffentlichungsnummer: **0 088 146**
**B1**

## (12) EUROPÄISCHE PATENTSCHRIFT

(45) Veröffentlichungstag der Patentschrift:
**16.07.86**

(51) Int. Cl.⁴: **F 16 K 47/02**

(21) Anmeldenummer: **82103002.0**

(22) Anmeldetag: **08.04.82**

(54) **Verteilventil.**

(30) Priorität: **02.03.82 CH 1264/82**

(43) Veröffentlichungstag der Anmeldung:
**14.09.83 Patentblatt 83/37**

(45) Bekanntmachung des Hinweises auf die Patenterteilung:
**16.07.86 Patentblatt 86/29**

(84) Benannte Vertragsstaaten:
**DE FR SE**

(56) Entgegenhaltungen:
**DE - A - 2 554 445**
**DE - C - 2 937 873**
**DE - U - 1 940 377**
**US - A - 1 062 614**
**US - A - 3 880 399**

(73) Patentinhaber: **GEBRÜDER SULZER AKTIENGESELLSCHAFT, Zürcherstrasse 9, CH-8401 Winterthur (CH)**

(72) Erfinder: **Teifenthaler, Edelbert, Schützenhausstrasse, CH-8353 Elgg (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

## Beschreibung

Die Erfindung betrifft ein Verteilventil nach dem Oberbegriff des Anspruchs 1.

Ein solches Verteilventil ist aus der deutschen Patentschrift DE-C 2 937 873 bekannt. Bei dem bekannten Ventil haben die Verteilkammer und die Umlenkkammer im wesentlichen zylindrische Form und die Verbindung zwischen diesen beiden Kammern besteht aus einer Wand, die eine als Ventilsitz dienende Öffnung aufweist. Der Verteilkörper des bekannten Ventils hat die Form eines flachen, doppelten Kegels, wobei beide Kegelflächen Sitzflächen sind, von denen die eine mit dem erwähnten Ventilsitz an der Öffnung zur Umlenkkammer und die andere Kegelfläche mit einem Ventilsitz am Übergang von der Verteilkammer zum Austrittstutzen zusammenwirkt. Der Verteilkörper hat also ausser der Verteilfunktion auch eine Absperrfunktion.

Ein Nachteil des bekannten Ventils liegt darin, dass die Ventilspindel mit dem daran befestigten Verteilkörper verhältnismässig weit ausladend ist und daher im Betrieb zum Schwingen neigt. Durch solches Schwingen wird die Spindel auf Ermüdung beansprucht, und es können auch die Spindellagerung und die Stopfbüchse ausgeschlagen werden. Weiter kann solches Schwingen sich auch in unzulässigem Lärm auswirken. Ein weiterer Nachteil besteht darin, dass infolge der durch den Ventilsitz zwischen der Verteilkammer und der Umlenkkammer gebildeten Einschnürung die Strömungsverhältnisse im Ventilgehäuse nicht günstig sind, was noch durch den absatzartigen Übergang vom flachen, doppelkegeligen Verteilkörper zur Ventilspindel unterstützt wird. Die ungünstigen Strömungsverhältnisse haben einen erhöhten Druckabfall zur Folge und können ebenfalls zum Schwingen anregen.

Es ist Aufgabe der Erfindung, das Verteilventil der eingangs genannten Art so zu verbessern, dass auf konstruktiv einfache und kostengünstige Weise die Strömungsverhältnisse günstiger werden und die Neigung zum Schwingen eliminiert wird, ohne dass die Spindel verdickt und damit die nötigen Ventilantriebskräfte erhöht werden müssten.

Diese Aufgabe wird erfindungsgemäss mit den Merkmalen des Kennzeichens des Anspruchs 1 gelöst. Bei dem erfindungsgemässen Verteilventil fehlt eine Absperrfunktion des Verteilkörpers. Durch die kugelförmige Ausbildung der beiden Kammern und das Vorsehen eines Durchtrittstutzens werden die Strömungsverhältnisse im Ventilgehäuse wesentlich günstiger. Das gleiche gilt für die Gestaltung des Verteilkörpers, da seine Rotationsflächen absatzlos von der Umfangsfläche zur Oberfläche der Ventilspindel verlaufen. Die günstigeren Strömungsverhältnisse reduzieren einerseits den Druckabfall des Verteilventils und andererseits die Neigung zum Schwingen der Ventilspindel mit dem Verteilkörper. Durch die Büchse wird darüber hinaus eine sichere Abstützung der Ventilspindel mit dem Verteilkörper erreicht, so dass ein Schwingen der Ventilspindel praktisch nicht mehr auftreten kann.

Aus dem DE-U 1 940 377 ist ein Rohrleitungsschalter bekannt, der eine zylindrische Verteilkammer mit daran angeschlossenem Eintrittstutzen sowie Austrittstutzen aufweist. Die Umlenkkammer ist ebenfalls zylindrisch und die Verbindung zwischen den beiden Kammern besteht aus einer eine Durchtrittsöffnung aufweisenden Wand. Um ein Flattern oder Schwingen der Ventilspindel mit dem daran befestigten Verteilkörper zu vermeiden, ist in der Verteilkammer eine mit Schlitzen versehene Büchse angeordnet. Die Büchse ist etwas kürzer als die axiale Länge der Verteilkammer und einseitig mit ihrem der Umlenkkammer zugewendeten Ende an der die beiden Kammern trennenden Wand befestigt. Der Verteilkörper besteht hier aus einer Scheibe aus elastischem Material, die an ihrem Umfang in zwei Ringlippen übergeht, die zu beiden Seiten der Scheibe liegen und sich in axialer Richtung nach aussen verjüngen. Dieser elastische Verteilkörper dient in den beiden Endlagen der Ventilspindel als Absperrkörper. Bei diesem bekannten Rohrschalter sind die Strömungsverhältnisse noch ungünstiger als bei dem Verteilventil nach der DE-C 2 937 873, so dass der Rohrleitungsschalter trotz des Vorhandenseins einer den Verteilkörper abstützenden Büchse keine Anregung für das erfindungsgemässe Verteilventil vermitteln kann.

Durch die Merkmale des Anspruchs 2 wird die Wartung des Verteilventils vereinfacht; insbesondere lässt sich die Büchse leicht kontrollieren und gegebenenfalls ersetzen.

Anspruch 3 bringt bessere Gleiteigenschaften und geringere Abnützung an den Gleitflächen des Verteilkörpers und der Büchse. Dadurch können die Revisionsintervalle verlängert werden und überdies wird der Mediumkreislauf weniger durch Abrieb verschmutzt.

Anspruch 4 erlaubt, die Stellencharakteristik des Ventils oder des Systems, in dem das Verteilventil angeordnet ist, linearer zu gestalten. Durch geeignete Wahl des Verlaufs der Breite der Durchtrittsöffnungen an die Widerstandseigenschaften der Zweige, an die das Verteilventil angeschlossen werden soll, lässt sich die Regelbarkeit des ganzen Systems verbessern.

Die Erfindung wird nun anhand der Zeichnung näher erläutert. Es zeigen:

Fig. 1 einen Längsschnitt durch ein Verteilventil nach der Erfindung,

Fig. 2 in Form einer Abwicklung: zwei Schlitze einer abgewandelten Form der Büchse von Fig. 1, und zwar in gegenüber Fig. 1 vergrössertem Massstab.

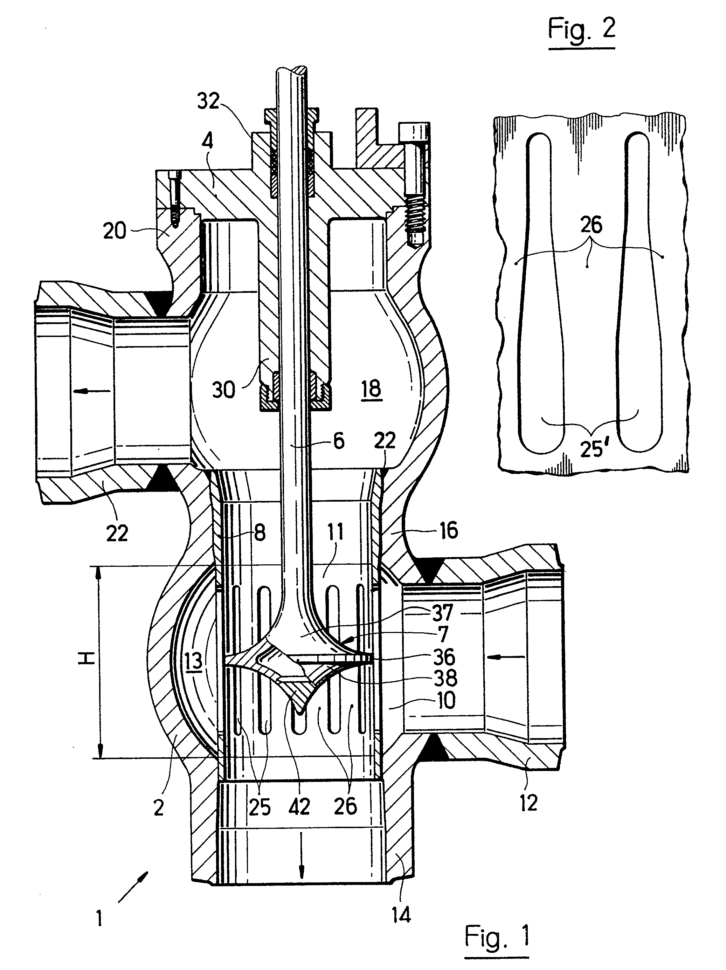

Das in Fig. 1 mit 1 bezeichnete Verteilventil besteht aus einem Gehäuse 2, einem Deckel 4, einer Ventilspindel 6 mit einem Verteilkörper 7 sowie einer Büchse 8. Das Gehäuse 2 weist eine kugelförmige Verteilkammer 10 auf, an der, wie die Schenkel des Buchstabens T, ein Eintrittstutzen 12, ein Austrittstutzen 14 und ein Durchgangsstutzen 16 münden. Der Durchgangsstutzen 16 führt von der Verteilkammer 10 zu einer ebenfalls kugelförmigen Umlenkkammer 18 des Gehäuses 2, an der, ebenfalls nach den Richtungen der Schenkel des Buchstabens T, Stutzen angeordnet sind, und zwar dem Durchgangstutzen 16 diagonal gegenüber ein Deckelstutzen 20 und, im rechten Winkel zur gemeinsamen Achse des Durchgangs- und des Deckelstutzens 16 bzw. 20 ein weiterer Austrittstutzen 22, der zur besseren Unterscheidung vom Austrittstutzen 14 in der folgenden Beschreibung als Bypassstutzen bezeichnet ist.

Der Austrittstutzen 14 ist zum Durchgangstutzen 16 und zum Deckelstutzen 20 koaxial angeordnet. Die Büchse 8 erstreckt sich über die volle Länge des Durchgangstutzens 16 und durch die Verteilkammer 10 bis in den Austrittstutzen 14. Sie sitzt mit enger Passung im Durchgangstutzen 16 und ist durch eine Ringschweissnaht 22 am Gehäuse 2 im Bereich des umlenkkammerseitigen Endes des Durchgangstutzens 16 befestigt. Das andere Ende der Büchse 8 ist im Austrittstutzen 14 axial gleitbar gelagert.

Die Büchse 8 unterteilt die Verteilkammer 10 in einen inneren, kreiszylindrischen Raum 11 und einen äusseren Ringraum 13 mit Kreissegment-Querschnitt. Sie ist von Durchtrittsöffnungen 25 durchsetzt, die als axial gerichtete, an den Enden abgerundete Schlitze ausgebildet sind.

Zwischen den Schlitzen 25 sind Stege 26 belassen, die etwa doppelt so breit sind wie die Schlitze 25. Die Büchse 8 ist innen über eine sich innerhalb der Verteilkammer 10 erstreckende Länge H oberflächengehärtet und kreiszylindrisch geschliffen. Ausserhalb des Abschnittes H ist die Büchse 8 auf einen um geringes grösseren Durchmesser ausgedreht.

Der Deckel 4 weist eine zum Deckelstutzen 20 koaxiale Spindelführung 30 und eine Stopfbüchse 32 auf. Die Spindel 6 wird von einem nicht gezeichneten, am Deckel 4 befestigten Stellmotor axial verstellt. Der am freien Ende der Spindel 6 sitzende Verteilkörper 7 weist eine schmale kreiszylindrische Umfangfläche 36 auf, an die sich auf beiden Seiten  viertelturusförmige Rotationsflächen 37 bzw. 38 anschliessen. Die Rotationsfläche 37 tangiert an die Oberfläche der Ventilspindel 6, während die Rotationsfläche 38 in einer Spitze endet.

Der Verteilkörper 7 ist, unter Bildung einer gleichdick verlaufenden Wand, ausgedreht. Die für diese Bearbeitung nötige Öffnung ist mit einer Schraube 42 verschlossen, deren nach aussen freie Oberfläche einen Teil der Rotationsfläche 38 bildet. Die zylindrische Umfangsfläche 36 ist durch die geschliffene Oberfläche eines Hartmetallauftrages gebildet. Der Verteilkörper 7 sitzt mit einem mittleren bis grossen Laufspiel in der Büchse 8.

Das Verteilventil 1 wird seiner Bezeichnung entsprechend verwendet, um einen Mediumstrom, der über den Eintrittstutzen 12 in das Gehäuse 2 eintritt, in zwei Zweigströme aufzuteilen, die das Gehäuse über den Austrittstutzen 14 und den Bypassstutzen 22 verlassen. Durch axiales Verstellen des Verteilkörpers 7 lässt sich das Mengenverhältnis der Zweigströme in grossem Bereich, praktisch von Null bis Unendlich, einstellen.

Das Verteilventil arbeitet nicht völlig symmetrisch. Befindet sich der Verteilkörper 7 bezüglich Fig. 1 in unterster Stellung, so wird der nun voll über den Bypassstutzen 22 austretende Mediumstrom wegen der Umlenkung in der Umlenkkammer stärker gedrosselt als ein Mediumstrom, der bei in oberster Lage befindlichem Verteilkörper 7 über den Austrittstutzen 14 das Gehäuse 2 verlässt. Je nach besonderer Aufgabe des Ventils und Art der Anlage, in der es verwendet werden soll, wird daher zweckmässig nicht der Bypassstutzen 22, sondern der Austrittstutzen 14 mit einer Bypassleitung verbunden.

Selbstverständlich kann das Verteilventil nicht nur an einer Verteilstelle eingesetzt werden, sondern auch dort, wo die Mengen zweier sich vereinigender Ströme aufeinander abgestimmt werden sollen. Es ist auch denkbar, das Verteilventil z.B über den Stutzen 14 zu speisen und Zweigströme über den Eintrittstutzen 12 und den Bypassstutzen 22 abzuziehen oder zwei zu vereinigende Mediumströme über den Eintrittstutzen 12 und den Bypassstutzen 22 in das Verteilventil einzuführen und den vereinigten Strom über den Austrittstutzen 14 abzuführen. Ein solcher Einsatz kann Vorteile bringen bezüglich der Stutzenstellungen während Nachteile bezüglich des Druckabfalls vielleicht nicht ins Gewicht fallen.

Je nach Anwendungsfall kann es auch zweckmässig sein, die Durchtrittsöffnungen 25 in der Büchse nichts als parallelwandige Schlitze auszuführen, sondern, wie Fig. 2 zeigt, als Schlitze 25' mit über die Länge veränderlicher Breite, wobei dann vorzugsweise die breiteren Enden jeweils demselben Ende der Büchse 8 zugewendet sind, so dass die Durchtrittsöffnungen 25' sich gegen das eine z.B. untere Ende der Büchse 8 hin über einem grösseren Anteil des Umfanges der Büchse erstrecken als gegen das andere, obere Ende der Büchse hin.

Eine solche Ausführung mit keulenförmigen Schlitzen 25' hat beispielsweise bei der «Triflux»-Regelung vom Dampferzeugern besondere Vorteile. Es wird dort die Temperatur von zwischenzuüberhitzendem Dampf beeinflusst, indem diesem seitens eines Hochdruckdampfstromes eine veränderbare Wärmemenge zugeführt wird. Diese Wärmeübertragung geschieht in mindestens einem Doppelrohr, das aussen von Wärme abgebendem Rauchgas umströmt ist, wobei im innern Rohr Dampf höheren Druckes und im Ringraum zwischen innerem und äusserem Rohr Dampf tieferen Druckes strömt. Die Beeinflussung der Wärmeübertragung geschieht dadurch, dass ein veränderbarer Teil des Dampfes höheren Drukkes über ein Verteilventil und eine Bypassleitung am Innenrohr der Trifluxstrecke vorbeigeführt wird. In diesem Falle hat es sich gezeigt, dass die Ausbildung der Büchse 8 nach Fig. 2 erhebliche regeltechnische Vorteile bringt, indem der Zusammenhang zwischen der zu regelnden Temperatur linear gestaltet oder doch bezüglich Linearität verbessert werden kann.

## Patentansprüche

1. Verteilventil mit einem Gehäuse (2), das eine Verteilkammer (10), einen an diese angeschlossenen Eintrittstutzen (12), eine mit der Verteilkammer in Verbindung stehende Umlenkkammer (18) sowie einen ebenfalls an die Verteilkammer (10) angeschlossenen, zum Eintrittstutzen (12) rechtwinklig angeordneten Austrittstutzen (14) umfasst sowie mit einer koaxial zum Austrittstutzen (14) angeordneten, axial verschiebbaren und über eine Stopfbüchse (32) aus der Umlenkkammer (18) herausführenden Ventilspindel (6), die innerhalb der Verteilkammer (10) einen Verteilkörper (7) trägt, dadurch gekennzeichnet, dass die Verteilkammer (10) und die Umlenkkammer (18) jeweils kugelförmig ausgebildet sind, dass das Gehäuse (2) als Verbindung zwischen der Verteilkammer (10) und der Umlenkkammer (18) einen zylindrischen Durchtrittstutzen (16) aufweist, dass in dem Austrittstutzen (14) und dem Durchtrittstutzen (16) eine die Verteilkammer (10) in einen kreiszylindrischen Raum (11) und einen Ringraum (13) unterteilende Büchse (8) gelagert ist, die vom Ringraum (13) ausgehende Durchtrittsöffnungen (25,25′) aufweist und den Verteilkörper (7) radial abstützt, und dass der als Rotationskörper ausgebildete Verteilkörper (7) eine schmale, kreiszylindrische, als Abstützfläche dienende Umfangsfläche (36) aufweist, an die sich beidseitig konkave, viertel-toroidförmige Rotationsflächen (37, 38) anschliessen, die in die Ventilspindel (6) übergehen.

2. Verteilventil nach Anspruch 1, mit in einem Deckel (4) des Gehäuses (2) angeordneter Stopfbüchse (32), dadurch gekennzeichnet, dass an die Umlenkkammer (18) ein Deckelstutzen (20) angeschlossen ist, dessen Lichtweite gross genug ist, um die Büchse (8) einzubringen, und dass die Büchse (8) im Durchgangstutzen (16) befestigt und im Austrittstutzen (14) axial verschiebbar gelagert ist.

3. Verteilventil nach Anspruch 1 oder 2, dadurch gekennzeichnet, dass die innere Kreiszylinderfläche der Büchse (8) gehärtet ist und die Umfangsfläche (36) des Verteilkörpers (7) eine Hartmetallbeschichtung aufweist.

4. Verteilventil nach einem der Ansprüche 1 bis 3, dadurch gekennzeichnet, dass sich die Durchtrittsöffnungen (25′) gegen das eine Ende der Büchse (8) hin über einen grösseren Anteil des Büchsenumfanges erstrecken als gegen das andere Ende hin.

## Claims

1. A distributing valve having a body (2) comprising: a distributing chamber (10); an inlet port (12) connected to the distributing chamber (10); a deflecting chamber (18) in communication with the distributing chamber (10); and an outlet port (14) which is also connected to the distributing chamber (10) and which is disposed at right-angles to the inlet port (12); and an axially movable valve spindle (6) which is disposed coaxially of the outlet port (14), extends out of the deflecting chamber (18) through a gland 32 and carries a distributing member (7) inside the distributing chamber (10), characterised in that the distributing chamber (10) and the deflecting chamber (18) are in shape spherical; the body (2) has as connection between the distributing chamber (10) and the deflecting chamber (18) a cylindrical through port (16); a bush (18) subdividing the distributing chamber (10) into a cylindrical chamber (11) and an annular chamber (13) is mounted in the outlet port (14) and the through port (16), is formed with through orifices (25,25′) starting from the annular chamber (13) and bears the distributing member (7) radially; and the distributing member (7), which is in the form of a body of rotation, has a narrow cylindrical circumferential surface (36) which is operative as bearing surface and into which concave quartertoroidal surfaces (37,38) of rotation merge on both sides, the latter surfaces merging into the valve spindle (6).

2. A valve according to claim 1 having a gland (32) disposed in a cover (4) of the body (2), characterised in that a cover port (20) is connected to the deflecting chamber (18), the internal width of the cover port (20) being sufficient to receive the bush (8); and the same is secured in the through port (16) and is mounted for axial movement in the outlet port (14).

3. A valve according to claim 1 or 2, characterised in that the inner cylindrical surface of the bush (8) is hardened and the peripheral surface (36) of the distributing member (7) is carbide-coated.

4. A distributing valve according to any of claims 1 – 3, characterised in that the through orifices (25′) extend towards one end of the bush (8) over a greater proportion of the bush periphery than they do towards the other end.

## Revendications

1. Valve de distribution comportant un carter (2) qui englobe une chambre de distribution (10), un raccord d'entrée (12) rattaché à cette dernière, une chambre de déviation (18) communiquant avec la chambre de distribution, et un raccord de sortie (14) qui se repique également sur la chambre de distribution (10) et est disposé à angle droit par rapport au raccord d'entrée (12), ainsi qu'une broche (6) qui est agencée coaxialement au raccord de sortie (14), peut coulisser axialement, sort de la chambre de déviation (18) par l'intermédiaire d'un presse-étoupe (32) et porte un corps distributeur (7) à l'intérieur de la chambre de distribution (10), caractérisée par le fait que la chambre de distribution (10) et la chambre de déviation (18) sont de configurations respectives sphériques; par le fait que le carter (2) présente un raccord cylindrique de passage (16) établissant la communication entre la chambre de distribution (10) et la chambre de déviation (18); par le fait qu'une douille (8), montée dans le raccord de sortie (14) et dans le raccord de passage (16), subdivise la chambre de distribution (10) en un compartiment cylindrique droit (11) et en un compartiment annulaire (13), cette douille présentant des orifices de passage (25, 25') qui partent du compartiment annulaire (13), et soutenant radialement le corps distributeur (7); et par le fait que le corps distributeur (7), réalisé en tant que corps rotatif, possède une étroite surface périphérique cylindrique droite (36) servant de surface d'appui, et à laquelle se raccordent de part et d'autre des surfaces concaves de rotation (37, 38) en forme de quart de tore, qui se prolongent par la broche (6).

2. Valve de distribution selon la revendication 1, présentant un presse-étoupe (32) logé dans un couvercle (4) du carter (2), caractérisée par le fait qu'un raccord (20) du couvercle se rattache à la chambre de déviation (18), la largeur interne de ce raccord étant suffisamment grande pour incorporer la douille (8); et par le fait que la douille (8) est fixée dans le raccord de passage (16) et est montée à coulissement axial dans le raccord de sortie (14).

3. Valve de distribution selon la revendication 1 ou 2, caractérisée par le fait que la surface interne du cylindre droit de la douille (8) est durcie, et la surface périphérique (36) du corps distributeur (7) possède un revêtement en métal dur.

4. Valve de distribution selon l'une des revendications 1 à 3, caractérisée par le fait que les orifices de passage (25') s'étendent, vers l'une des extrémités de la douille (8), sur une plus grande portion du pourtour de cette douille que vers l'autre extrémité.

Fig. 2

Fig. 1